# EUROPEAN PATENT SPECIFICATION

(11) **EP 0 425 038 B1**
(45) Date of publication and mention of the grant of the patent: **15.06.1994**
(21) Application number: 90202804.2
(22) Date of filing: 19.10.1990
(51) Int. Cl.: H04M 15/28, H01H 67/00

(54) **Method and device for connecting an apparatus to that terminal of the electricity mains which has the lowest impedance to earth compared with the other terminal**
Verfahren und Anordnung zum Anschluss eines Geräts an die Anschlussklemme des Netzes, die gegenüber der anderen Anschlussklemme die niedrigste Impedanz hat
Méthode et dispositif pour la connexion d'un appareil à la borne du réseau qui a la plus petite impédance par rapport à l'autre borne

(30) Priority: 23.10.1989 NL 8902617
(43) Date of publication of application: 02.05.1991
(73) Proprietor: Koninklijke PTT Nederland N.V., 2509 CH Den Haag (NL)
(72) Inventor: Boelhouwers, Hendrik Cornelis, NL-3076 VD Rotterdam (NL); Catijn, Paul Johannes, NL-2722 ZJ Zoetermeer (NL); van der Krogt, Adrianus Alphonsius Maria, NL-2253 RZ Voorschoten (NL)

(56) References cited:
- GB-A- 2 005 111

## Description

### A. BACKGROUND OF THE INVENTION

### 1. Field of the invention

The invention relates to a method for connecting one side of an apparatus, connected on the other side to an earthed system, to one of several terminals of a single-phase or polyphase electricity mains, which has the lowest impedance to earth compared with the other terminal or terminals. The invention furthermore relates to a device for carrying out such a method. In particular, the invention relates to a method and device for connecting a telephone subscriber call duration meter to the neutral terminal (neutral phase) of the public electricity mains.

### 2. Problems

In the Dutch telephone system, a telephone subscriber call duration meter is controlled from the telephone exchange by means of an alternating voltage pulse (75 volt, 50 Hz) which is applied between, on the one hand, the a and the b wire of the telephone connection and, on the other hand, earth potential. In this way, the counting pulse is inaudible to the telephone subscriber. If a subscriber wishes to use a call duration meter, for example to monitor his telephone expenses, it is necessary for the telephone terminal of said subscriber to be provided with an earth terminal so that the call duration meter can be connected between, on the one hand, the a and b wire (via an impedance) and, on the other hand, the earth terminal. Although in many cases said earth terminal is in fact present it is not, however, usually terminated in the telephone wall outlet, If a telephone subscriber purchases a call duration meter, this makes it necessary for an engineer from the telephoen company (PTT) to investigate whether the subscriber terminal is in fact provided with an earth terminal. If no earth terminal is present, it then has to be effected.

### B. SUMMARY OF THE INVENTION

In order to encourage the use of call duration meters, the invention provides a method for obtaining an earth terminal via the public electricity mains. The invention furthermore provides a device for carrying out such a method.

In general, the method according to the invention is characterized
■ in that each of the electricity mains terminals is coupled to the earthed system;
■ in that the current which flows between the electricity mains and the earthed system is detected for each of the terminals;
■ in that the terminal for which the current is a minimum is detected;
■ and in that the terminal for which the current is a minimum is connected to the apparatus.

This method therefore determines, by means of measuring the respective currents between the terminals and the telephone system (the a and b wires of which are connected to earth via impedances), that electricity mains terminal whose voltage (and therefore the impedance) is the lowest with respect to earth.

The device for carrying out the abovementioned method is preferably characterized in that the said apparatus is a call duration meter and in that the said earthed system is a telephone system, one or both subscriber wires of which are connected to earth. The current detection device therein can either measure the various currents simultaneously (multiple current detection device) or do this sequentially (single current detection device), in which latter case the current detection device has to be connected, by means of a selection device, consecutively with the various terminals of the electricity mains. In accordance therewith, the device according to the invention is preferably further characterized by a current detection device (R3/D) which is connected, on the one side, to one or more electricity mains terminals and which is connected, on the other side, to the earthed system, and moreover by a selection device (S) which can be controlled by the current detection device and which is connected, on the one side, to the said apparatus (T) and, on the other side, to the electricity mains terminals, which selection device connects, under the control of the current detection device, that electricity mains terminal, to the apparatus, for which the detected current is a minimum. In particular, the said earthed system is a telephone system, of which one or both subscriber wires are connected to earth (via an impedance).

### C. REFERENCES

GB-A-2 005 111 discloses a general telephone charge pulse receiver circuit.

### D. EXEMPLARY EMBODIMENTS

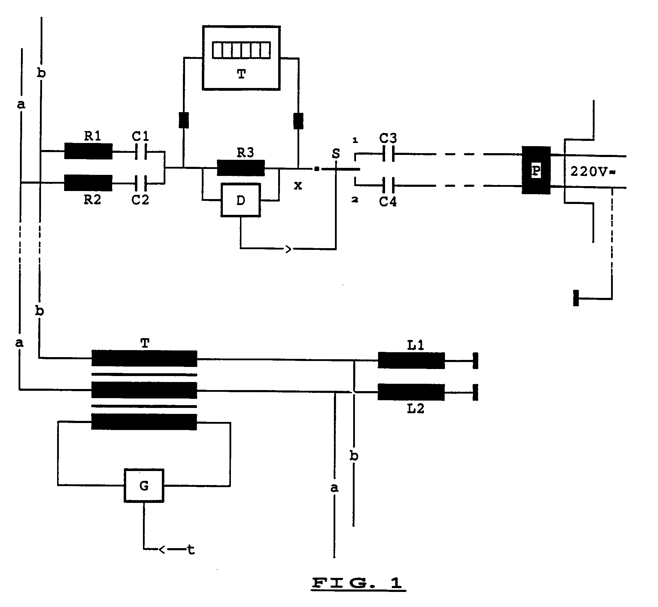

Figure 1 shows a preferred embodiment of the device according to the invention. The device comprises two resistors R1 and R2 and two capacitors C1 and C2 via which the device is connected to the a and b wire of the telephone system. It further comprises two capacitors C3 and C4 via which the device is connected, by means of a contract plug P, to the electricity mains. The device comprises, moreover, a resistor R3 with a voltage detector D in parallel with it and an (electronic or mechanical) switching device S. The switching device S can be controlled by the voltage detector D. The figure shows, moreover, a call duration meter T which is connected to either side of resistor R3. The a and b wires of the telephone system are each connected via coils L1 and L2 to earth.

The operation is as follows. As soon as the contact plug P makes contact with the electricity mains, depending on the position of the switching device S, the detection device D detects whether there is a voltage across resistor R3. If resistor R3 is connected via switching device S to a terminal of the electricity mains on which there is no (or only a low) voltage with respect to earth (position 2 of the switching device S in the figure), the current through R3 is 0 (or small). If this is the case, the voltage detector D does not deliver a control signal to the switching device S, as a result of which the resistor R3 therefore remains connected to said terminal of the electricity mains. Since said terminal has a low impedance with respect to earth, it can be used to act as earth terminal for the call duration meter T which is connected, on the other hand, via R1/C1 and R2/C2 to the a and b wire of the telephone terminal and can therefore receive metering pulses via a metering pulse generator G in the telephone exchange (via a transformer T; the metering pulse generator G is controlled by means of control pulses t). If resistor R3 is connected via switching device S to a terminal of the electricity mains on which there actually is a voltage with respect to earth (position 1 of the switching device S in the figure), the current through R3 is relatively large. If this is the case, the voltage detector D delivers a control signal to the switching device S, as a result of which it switches over to the other position (positions 2). Resistor R3 is thereby connected to that electricity mains terminal which has the relatively low voltage (and impedance) with respect to earth, as a result of which the meter T is connected again to the desired terminal.

It is pointed out that the switching device S may also be a multi-position switching device if the device should have to be connected to a polyphase electricity mains. In that case, the resistor R3 is successively connected via the switching device S to the various terminals of the electricity mains until a terminal is found for which the voltage across R3 is zero or has a low value.

## Claims

1. Method for connecting one side of an apparatus, connected on the other side to an earthed system, to one of several terminals of a single-phase or polyphase electricity mains, which terminal has the lowest impedance to earth compared with the other terminal or terminals, characterized
■ in that each of the electricity mains terminals is coupled to the earthed system;
■ in that the current which flows between the electricity mains and the earthed system is detected for each of the terminals;
■ in that the terminal for which the current is a minimum is detected;
■ and in that the terminal for which the current is a minimum is connected to the apparatus.

2. Method according to Claim 1, characterized in that the said apparatus is a call duration meter and in that the said earthed system is a telephone system, one or both subscriber wires of which are connected to earth.

3. Device for carrying out the method for connecting one side of an apparatus, connected on the other side to an earthed system, to one of several terminals of a single-phase or polyphase electricity mains, which terminal has the lowest impedance to earth compared with the other terminal or terminals according to Claim 1, characterized by a current detection device (R3/D) which is connected, on the one side, to one or more electricity mains terminals and which is connected, on the other side, to the earthed system, and moreover, by a selection device (S) which can be controlled by the current detection device and which is connected, on the one side, to the said apparatus (T) and, on the other side, to the electricity mains terminals, which selection device connects, under the control of the current detection device, that electricity mains terminal, to the apparatus, for which the detected current is a minimum.

4. Device according to Claim 3, characterized in that the current detection device (R3/D) and the selection device (S) are inserted in series with each other between the electricity mains and the earthed system and in that the common connection point (x) of the devices can be coupled to the said apparatus (T).

## Patentansprüche

1. Verfahren zum Anschließen eines mit einem geerdeten System verbundenen Geräts an einen von mehreren Anschlüssen eines Ein- oder Mehrphasenstromnetzes, der gegenüber dem anderen Anschluß bzw. den anderen Anschlüssen die niedrigste Impedanz hat, dadurch gekennzeichnet,
- daß jeder Anschluß des Stromnetzes an das geerdete System angeschlossen wird;
- daß für jeden Anschluß der zwischen dem Stromnetz und dem geerdeten System fließende Strom ermittelt wird;
- daß ermittelt wird, bei welchem Anschluß der Strom minimal ist;
- und daß der Anschluß, bei dem der Strom minimal ist, mit dem Gerät verbunden wird.

2. Verfahren nach Anspruch 1, dadurch gekennzeichnet, daß das genannte Gerät ein Gesprächsdauerzähler ist und daß das genannte geerdete System ein Telefonnetz ist, dessen eine oder beide Teilnehmeranschlußleitungen mit der Erdung verbunden ist bzw. sind.

3. Anordnung zur Durchführung des Verfahrens zum Anschließen eines mit einem geerdeten System verbundenen Geräts an einen von mehreren Anschlüssen eines Ein- oder Mehrphasenstromnetzes, der gegenüber dem anderen Anschluß bzw. den anderen Anschlüssen die niedrigste Impedanz hat nach Anspruch 1, gekennzeichnet durch ein Stromermittlungsorgan (R3/D), das einerseits mit einem oder mehreren Anschlüssen des Stromnetzes verbunden ist, und das andererseits mit dem geerdeten System verbunden ist, und ferner durch ein vom Stromermittlungsorgan steuerbares Selektionsorgan (S), das einerseits mit dem genannten Gerät (T) verbunden ist und andererseits mit den Anschlüssen des Stromnetzes, wobei das Selektionsorgan, gesteuert durch das Stromermittlungsorgan, den Anschluß des Stromnetzes mit dem Gerät verbindet, bei dem der ermittelte Strom minimal ist.

4. Anordnung nach Anspruch 3, dadurch gekennzeichnet, daß das Stromermittlungsorgan (R3/D) und das Selektionsorgan (S) seriell zwischen dem Stromnetz und dem geerdeten System angeordnet sind, und daß der gemeinsame Verbindungspunkt (x) dieser Organe an das genannte Gerät (T) anschließbar ist.

## Revendications

1. Méthode de connexion d'un appareil connecté d'autre part à un système mis à terre, à l'une de plusieurs bornes d'un réseau électrique à une ou plusieurs phases, cette borne ayant la plus petite impédance à terre par rapport aux autres bornes, caractérisée en ce que:
- chacune des bornes du réseau électrique est connectée au système mis à terre;
- le courant circulant entre le réseau électrique et le système mis à terre est mesuré sur chaque borne;
- il est détecté sur laquelle des bornes le courant est le moindre;
- et que la borne sur laquelle le courant est le moindre est connectée à l'appareil.

2. Méthode selon la revendication 1, caractérisée en ce que ledit appareil est un compteur de durée de communication et que ledit système mis à terre est un réseau téléphonique dont l'un ou les deux fils des lignes d'abonnés sont mis à terre.

3. Dispositif destiné à effectuer la méthode de connexion selon la revendication 1 d'un appareil connecté d'autre part à un système mis à terre, à l'une de plusieurs bornes d'un réseau électrique à une ou plusieurs phases, cette borne ayant la plus petite impédance à terre par rapport aux autres bornes, caractérisé par un organe de détection de courant (R3/D) connecté d'une part à une ou plusieurs bornes du réseau électrique et connecté d'autre part au système mis à terre, et par un organe de sélection (S), connecté d'une part au dit appareil (T) et d'autre part aux bornes du réseau électrique, pouvant être commandé par l'organe de détection de courant, lequel organe de sélection connectant, sous la commande de l'organe de détection de courant, ledit appareil à la borne du réseau électrique sur laquelle le courant détecté est le moindre.

4. Dispositif selon la revendication 3, caractérisé en ce que l'organe de détection de courant (R3/D) et l'organe de sélection (S) sont connectés en série entre le réseau électrique et le système mis à terre, et que le point de connexion commun (x) de ces organes peut être couplé au dit appareil (T).
